# EUROPEAN PATENT APPLICATION

(11) **EP 4 749 761 A2**
(43) Date of publication of application: **27.05.2026**
(21) Application number: 25215741.7
(22) Date of filing: 13.11.2025
(51) Int. Cl.: H01M 10/48, H01M 10/613, H01M 10/633, H01M 10/6563, H01M 10/663, H01M 10/635, H01M 10/627

(54) **TEMPERATURE CONDITIONED ENERGY STORAGE SYSTEM**

(30) Priority: 26.11.2024 US 202463725082 P
(71) Applicant: Carrier Corporation, Palm Beach Gardens, FL 33418 (US)
(72) Inventor: WANG, Ligong, East Syracuse, NY 13057 (US); JOARDAR, Arindom, East Syracuse, NY 13057 (US); KIM, HanJong, Palm Beach Gardens, FL 33418 (US); BLAKE, Jonathan, Palm Beach Gardens, FL 33418 (US)
(74) Representative: Dehns

(57) **Abstract**

An energy system (100) having: a heating, ventilation and/or air conditioning (HVAC) system (110) that includes an HVAC branch loop (250) with an HVAC conditioning flow (175) that flows in one direction or bidirectionally; a battery energy storage system (ESS) (120) that includes a battery pack (190), having batteries (200), configured for an operating temperature within a target temperature range, an ESS conditioning loop (210) with an ESS conditioning flow (220), wherein the ESS conditioning loop (210) is thermally coupled to the battery pack (190), and the HVAC branch loop (250) and the ESS conditioning loop (210) are fluidly isolated from each other; a heat exchanger (255), wherein the HVAC branch loop (250) and the ESS conditioning loop (210) are thermally coupled to each other via the heat exchanger (255); and a controller (280) configured to control flow within the HVAC branch loop (250) and the ESS conditioning loop (210) such that the battery pack (190) operates within the target temperature range.

## Description

### BACKGROUND

Exemplary embodiments pertain to the art of energy storage systems and specifically to a temperature conditioned energy storage system.

There is significant investment in energy infrastructure to provide products that optimize energy usage. Such investment includes the use of energy storage system (ESS) as backup power, e.g., using Lithium-Ion (Li-ion) batteries. A heating, ventilation and/or air conditioning (HVAC) system consumes significant electricity, and is thus suitable for being supported by ESS backup power. Li-ion batteries operate optimally within a temperature range of five to forty degrees Celsius. Outside of this range, the battery efficiency degrades and the systems utilizing the batteries may be shut down to avoid damaging the batteries. The temperature of the batteries can be impacted by charging or discharging, which raises the temperature of the batteries, and ambient conditions such as summer heating and winter cooling.

### BRIEF DESCRIPTION

According to a first aspect of the invention there is provided an energy system including: a heating, ventilation and/or air conditioning (HVAC) system that includes an HVAC branch loop with an HVAC conditioning flow that flows in one direction or bidirectionally; a battery energy storage system (ESS) that includes a battery pack, having batteries, configured for an operating temperature within a target temperature range, an ESS conditioning loop with an ESS conditioning flow, wherein the ESS conditioning loop is thermally coupled to the battery pack, and the HVAC branch loop and the ESS conditioning loop are fluidly isolated from each other; a heat exchanger, wherein the HVAC branch loop and the ESS conditioning loop are thermally coupled to each other via the heat exchanger; and a controller configured to control flow within the HVAC branch loop and the ESS conditioning loop such that the battery pack operates within the target temperature range.

The target temperature range may be between five and forty degrees Celsius.

The battery pack may include lithium-ion batteries.

The ESS conditioning loop may be fluidly coupled to the battery pack so that the ESS conditioning flow is configured to flow through the battery pack and around each of the batteries.

The HVAC conditioning flow may be air, and the ESS conditioning flow may be air or a dielectric.

The HVAC branch loop may include an HVAC branch flow motivator operationally coupled to the controller, wherein the controller may be configured to control the HVAC branch flow motivator, to draw the HVAC conditioning flow through the HVAC branch loop, and, while the HVAC branch flow motivator is operating, the controller may be configured to control one or more of the temperature and flow rate through the through the HVAC branch loop, to thereby control a temperature of the ESS conditioning flow in the ESS conditioning loop.

The HVAC branch flow motivator may be one or more of a compressor or an expansion valve.

The HVAC system may include a heat pump to heat the HVAC conditioning flow when the temperature of the battery pack approaches a lower limit of the target temperature range.

The controller may determine cooling or heating requirements of the battery pack based on an ambient temperature.

The controller may determine cooling requirements of the battery pack based on a charge or discharge rate of the batteries.

According to a second aspect of the invention there is provided a method of modulating an operating temperature of a battery pack, having batteries, of a battery energy storage system (ESS) so that the operating temperature remains within a target temperature range, the method including: directing, by a controller, a heating ventilation and air conditioning (HVAC) conditioning flow that flows in one direction or bidirectionally at a temperature and a flow rate to an HVAC branch loop towards a heat exchanger to modulate a temperature of an ESS conditioning flow in an ESS conditioning loop that is fluidly isolated from the HVAC branch loop, wherein the ESS conditioning loop is thermally coupled to the HVAC branch loop via the heat exchanger and thermally coupled to the battery pack; and controlling, by the controller, one or more of the temperature and the flow rate of the HVAC conditioning flow, to thereby maintain the battery pack in a targeted temperature range.

The target temperature range may be between five and forty degrees Celsius.

The battery pack may include lithium-ion batteries.

The ESS conditioning loop may be fluidly coupled to the battery pack so that the ESS conditioning flow is configured to flow through the battery pack and around each of the batteries.

The HVAC conditioning flow may be air, and the ESS conditioning flow may be air or a dielectric.

The HVAC branch loop may include an HVAC branch flow motivator operationally coupled to the controller, wherein the method may include controlling, by the controller, the HVAC branch flow motivator, to draw the HVAC conditioning flow through the HVAC branch loop, and while the HVAC branch flow motivator is operating, controlling one or more of the temperature and the flow rate of the HVAC conditioning flow, to thereby control the temperature of the ESS conditioning flow in the ESS conditioning loop.

The HVAC branch flow motivator may be one or more of a compressor or an expansion valve.

The HVAC system may include a heat pump, and the method may include controlling, by the controller, the HVAC system to heat the HVAC conditioning flow when the operating temperature of the battery pack approaches a lower limit of the target temperature range.

The method may include determining, by the controller, cooling or heating requirements of the battery pack based on an ambient temperature.

The method may include determining, by the controller, cooling requirements of the battery pack based on a charge or discharge rate of the batteries.

### BRIEF DESCRIPTION OF THE DRAWINGS

The following descriptions should not be considered limiting in any way. With reference to the accompanying drawings, like elements are numbered alike:
FIG. 1 is a schematic illustration of an HVAC system supported by an ESS which is configured for conditioning batteries of the ESS to operate within a target temperature range;
FIG. 2 is a flowchart of a method of operating the system of FIG. 1 for conditioning batteries of the ESS to operate within the target temperature range; and
FIG. 3 is another flowchart showing additional steps of the method of operating the system of FIG. 1 for conditioning batteries of the ESS to operate within the target temperature range.

### DETAILED DESCRIPTION

A detailed description of one or more embodiments of the disclosed apparatus and method are presented herein by way of exemplification and not limitation with reference to the Figures.

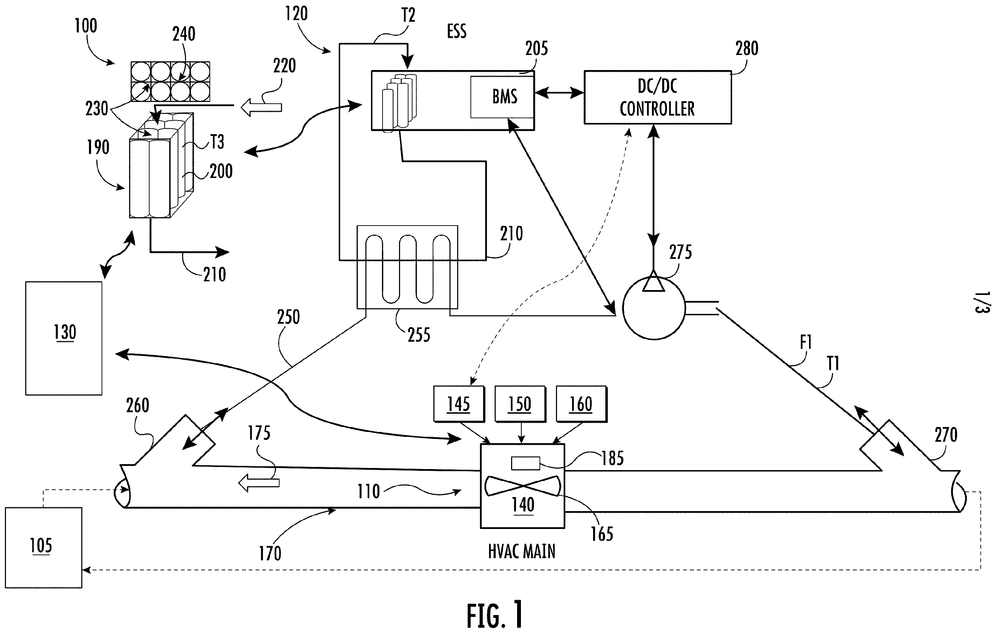

Turning to FIG. 1, a system 100 is shown that includes an HVAC system 110 and an energy storage system (ESS) 120, utilized for a residential structure 105. The ESS 120 may provide power to the HVAC system 110 as needed, e.g., for reduction of power consumption from the grid 130, such as the United States power grid, is for primary energy supply purposes at predetermined times or at predetermined intervals to lessen a burden on the grid.

The HVAC system 110 may include an HVAC main 140, which may include an HVAC controller 145, a compressor 150, a heat pump 160 and a variable frequency drive (VFD) 165. The HVAC system 110 may have an HVAC loop 170 that supplies cooled or heated air to living spaces in the residential structure 105. An HVAC agent 185 such as refrigerant or air, may be utilized by the HVAC system 110 for cooling or heating purposes, i.e., to provide HVAC conditioning flow 175 that flows bidirectionally (e.g., due to the heat pump 160) through the HVAC loop 170.

The ESS 120 may have a battery pack (or module) 190 that includes individual batteries 200 which may be Lithium-Ion (Li-ion) batteries. The ESS 120 may include a battery management system (BMS) 205 that monitors the temperature of the batteries 200 and controls operation of the ESS 120. With the BMS 205, the batteries 200 may remain charged and operate within a predetermined range of five to forty degrees Celsius, as a non-limiting example.

To control a temperature of the batteries 200, the ESS may include an ESS conditioning loop 210 through which a flow agent (or ESS conditioning flow) 220 flows. The ESS conditioning flow 220 may be air or a dielectric. The ESS conditioning loop 210 may be a closed loop which directs the ESS conditioning flow 220 bidirectionally into the battery pack 190 and into the space (vacuity) 230 between the batteries 200. The space 230 may result from the shape of the batteries 200, such as cylindrical batteries 200 stacked in a grid formation with sidewalls 240 touching. Or the space 230 may be arranged by positioning of the batteries 200 in the battery pack 190 configured to provide spacing between the sidewalls 240 of adjacent batteries 200. Such spacing would be greater in size compared with stacking the batteries 200 so that sidewalls 240 touch or contact each other.

An HVAC branch loop 250 may extend from the HVAC loop 170 to thermally engage the ESS conditioning loop 210 via a heat exchanger 255. The HVAC branch loop 250 may have fore and aft junctions 260, 270 that engage the HVAC loop 170 fore and aft (or upstream and downstream) of the HVAC main 140. An HVAC branch flow motivator 275 may be in the ESS conditioning loop 210. The HVAC branch loop 250 may be thermally coupled to the ESS conditioning loop 210 via heat exchanger 255. The HVAC branch flow motivator 275 may be a secondary compressor and/or an expansion valve which motivates the HVAC conditioning flow 175 to flow through the HVAC branch loop 250. That is, the HVAC branch flow motivator 275, driving the HVAC conditioning flow 175 through the heat exchanger 255 at a first temperature T1 and flow rate F1, may provide for controlling a second temperature T2 of the ESS conditioning flow 220 in the ESS conditioning loop 210. This configuration may control the operating temperature (third temperature T3) of the batteries 200 in the battery pack 190.

A DC/DC controller (or controller) 280 may be operationally coupled to the BMS 205, the HVAC branch flow motivator 275 and the HVAC controller 145. That is, the controller 280 may receive the heating or cooling requirements of the batteries 200 of the ESS 120 as determined by the BMS 205, and the operating conditions of the HVAC system 110, such as the temperature and flow rate through the HVAC main 140, to meet the identified cooling or heating needs of the battery pack 190. The controller 280 may control the HVAC main 140 to provide for a determined temperature and volumetric flow of the HVAC conditioning flow 175 through the HVAC branch loop 250, drawn by the HVAC branch flow motivator 275, to condition the ESS conditioning flow 220. That is, the conditions of the ESS conditioning flow 220, following flow through the heat exchanger 255, enable reaching the targeted operating temperature for the batteries 200.

The batteries 200 may charge or discharge at a continuous rate, resulting in heating of the batteries 200, and should remain within the acceptable temperature range. Additionally, outdoor summer and winter temperatures may result in heating or cooling of the batteries 200. In the case of high temperatures, such as fifty-five degrees Celsius, e.g., in some areas in North America during summer, performance of the ESS 120, if not temperature controlled, may become degraded or interrupted to prevent damage to the ESS 120.

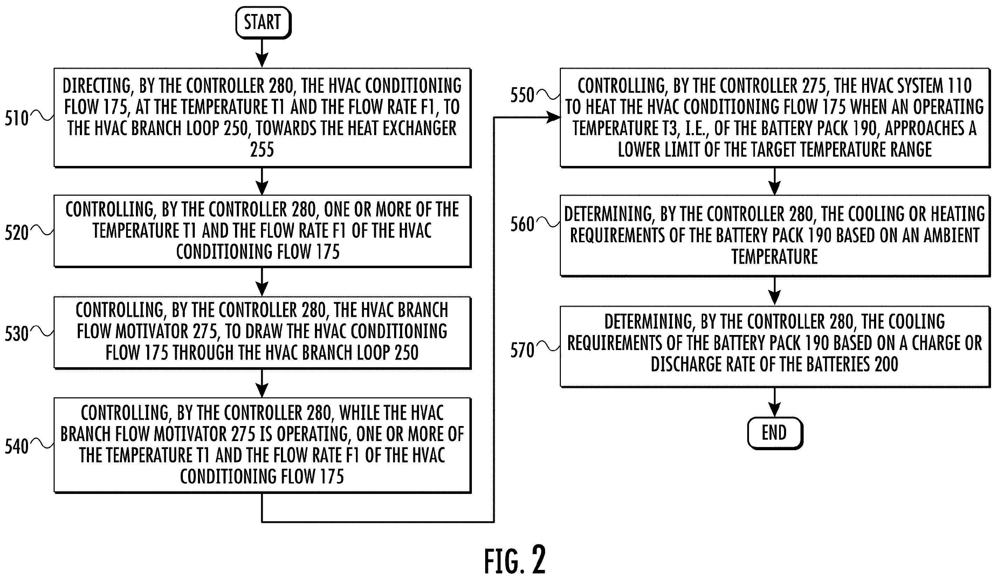

Turning to FIG. 2, a flowchart shows a method of modulating the operating temperature T3 of the battery pack 190 of the ESS 120 so that the operating temperature T3 for the batteries 200 remains within a desired (e.g., first) temperature range. As shown in block 510, the method includes directing, by the controller 280, the HVAC conditioning flow 175, at the first temperature T1 and the flow rate F1 to the HVAC branch loop 250, towards the heat exchanger 255. This is to modulate a second temperature T2 of the ESS conditioning flow 220 in the ESS conditioning loop 210 that is fluidly isolated from the HVAC branch loop 250. The ESS conditioning loop 210 is thermally coupled to the HVAC branch loop 250 via the heat exchanger 255 and thermally coupled to the battery pack 190.

As shown in block 520 the method includes controlling, by the controller 280, one or more of the first temperature T1 and the flow rate F1 of the HVAC conditioning flow 175. This maintains the battery pack 190 in a targeted temperature range. As indicated, the target temperature range is between five and forty degrees Celsius. As further indicated, the battery pack 190 includes Li-ion batteries 200 (battery cells). The ESS conditioning loop 210 is fluidly coupled to the battery pack 190 so that the ESS conditioning flow 220 flows through the battery pack 190 and around each of the batteries 200. The HVAC conditioning flow 175 is air, and the ESS conditioning flow 220 is air or a dielectric.

The HVAC branch loop 250 includes an HVAC branch flow motivator 275 operationally coupled to the controller 280. As shown in block 530, the method includes controlling, by the controller 280, the HVAC branch flow motivator 275, to draw the HVAC conditioning flow 175 through the HVAC branch loop 250. As shown in block 540 the method includes controlling, by the controller 280, while the HVAC branch flow motivator 275 is operating, one or more of the first temperature T1 and the flow rate F1 of the HVAC conditioning flow 175. The temperature and flow rate are modified via the HVAC main 140. This controls the second temperature T2 of the ESS conditioning flow 220. As indicated, the HVAC branch flow motivator 275 is one or more of a (second) compressor or an expansion valve.

As indicated, the HVAC system 110 may include a heat pump 160, e.g., as part of the HVAC main 140. As shown in block 550, the method includes controlling, by the controller 280, the HVAC system 110 to heat the HVAC conditioning flow 175 when an operating temperature T3, i.e., of the battery pack 190, approaches a lower limit of the target temperature range.

As shown in block 560 the method includes determining, by the controller 280, the cooling or heating requirements of the battery pack 190 based on an ambient temperature. For example, on hot days, the battery pack 190 may require cooling to remain within the targeted temperature range. On cold days, the battery pack 190 may require heating to remain within the targeted temperature range. As shown in block 570 the method includes determining, by the controller 280, the cooling requirements of the battery pack 190 based on a charge or discharge rate of the batteries 200. For example, when charging or discharging the battery pack 190, which increased the temperature of the batteries 200, the battery pack 190 may require cooling to remain within the targeted temperature range.

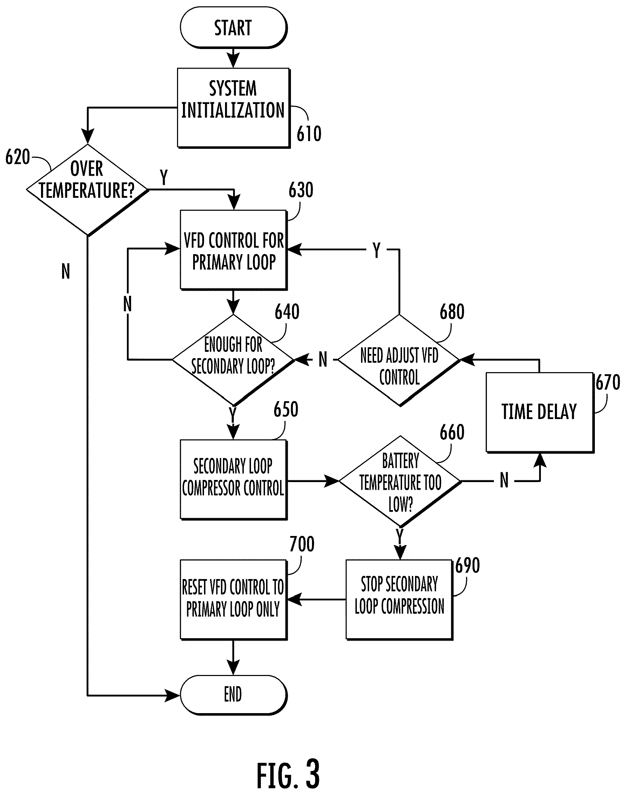

Turning to FIG. 3, additional aspects of the method of utilizing the system of FIG. 1 to condition the battery pack 190 are shown. The method includes block 610 of initializing the system 100. As shown in block 620 the method includes determining, e.g., by the controller 280, whether the temperature of the batteries 200 is above a threshold, i.e., moving toward the top end of the goal temperature range. If the determination at block 620 is no, then the process ends. Otherwise, if the determination at block 620 is yes then at block 630 the method includes controlling, e.g., by the controller 280 in communication with the HVAC controller 145, the VFD 165 in the HVAC main 140 to cause the HVAC conditioning flow 175 to flow through the HVAC loop 170, i.e., the primary loop.

At block 640 a determination is made as to whether the HVAC conditioning flow 175, i.e., the volume of the flow, is sufficient for the HVAC branch loop 250, i.e., the secondary loop. If the determination at block 640 is no, then the method returns to block 630 to adjust the VFD 165. When the HVAC conditioning flow 175 is sufficient in the HVAC loop 170 to accommodate the HVAC branch loop 250 (yes at block 640), the method includes block 650 of controlling the HVAC branch flow motivator 275 to draw the HVAC conditioning flow 175 through the HVAC branch loop 250. At block 660, the method includes determining whether the battery temperature is low. If the determination at block 670 is no, i.e., because the batteries 200 are running hot, then a delay timer runs at block 670 for a predetermined period of time. Then a determination is made at block 680 whether to adjust the volume flow rate of the HVAC conditioning flow 175, e.g., to increase the flow rate that may be drawn into the HVAC branch loop 250 by action of the HVAC branch flow motivator 275. If the determination at block 680 is yes, then the method returns to block 630. Otherwise the method returns to block 640, the HVAC branch flow motivator 275 remains running (block 650) and the determination is again made as to whether the temperature of the batteries 200 is low.

Once the determination is made that the temperature of the batteries 200 is low (yes at block 660), the method continues to block 690 of stopping the HVAC branch flow motivator 275. Then at block 700, the VFD 165 is controlled to produce a volume sufficient only for the HVAC loop 170 and the process ends.

According to the above embodiments, temperature of the batteries 200 in the ESS 120 that supports the HVAC system 110 are conditioned by the HVAC conditioning flow 175 via the HVAC branch loop 250 interacting with the ESS conditioning flow 220 in the ESS conditioning loop 210. The space 230 between the batteries 200 is filled with ESS conditioning flow 220, which may be a fluid dielectric or an airflow, to keep temperatures of the batteries 200 within an acceptable range. The temperature of the batteries 200 could be modulated by adjusting the temperature of the HVAC conditioning flow 175 in the HVAC main 140, for cooling or heating purposes. The BMS 205 and controller 280 may communicate with each other and decide the target temperature and flow rate (e.g. in cubic feet per minute, or CFM) of the HVAC conditioning flow 175 available for flowing through the HVAC branch loop 250 based on conditions, actual or anticipated, of the batteries 200. The HVAC branch flow motivator 275, such as a compressor, in the HVAC branch loop 250, may draw the HVAC conditioning flow 175 into and through the HVAC branch loop 250.

With the disclosed embodiments, the ESS 120 is integrated with the HVAC system 110 and is configured to support the operation of batteries 200 in the ESS 120 such that the batteries 200 remain within a target temperature range. By leveraging cooling and heating resources from the HVAC system 110, the system 100 makes batteries 200 safer to use and extends the life of the batteries 200 by preventing the batteries 200 from operation under extreme temperature conditions.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An energy system (100) comprising:
a heating, ventilation and/or air conditioning, HVAC, system (110) that includes an HVAC branch loop (250) with an HVAC conditioning flow (175) that flows in one direction or bidirectionally;
a battery energy storage system, ESS, (120) that includes a battery pack (190), having batteries (200), configured for an operating temperature within a target temperature range, an ESS conditioning loop (210) with an ESS conditioning flow (220), wherein the ESS conditioning loop is thermally coupled to the battery pack, and the HVAC branch loop and the ESS conditioning loop are fluidly isolated from each other;
a heat exchanger (255), wherein the HVAC branch loop and the ESS conditioning loop are thermally coupled to each other via the heat exchanger; and
a controller (280) configured to control flow within the HVAC branch loop and the ESS conditioning loop such that the battery pack operates within the target temperature range.

2. The system of claim 1, wherein the target temperature range is between five and forty degrees Celsius.

3. The system of claims 1 or 2, wherein the battery pack includes lithium-ion batteries.

4. The system of any of claims 1-3, wherein the ESS conditioning loop is fluidly coupled to the battery pack so that the ESS conditioning flow is configured to flow through the battery pack and around each of the batteries.

5. The system of any of claims 1-4, wherein the HVAC conditioning flow is air, and the ESS conditioning flow is air or a dielectric.

6. The system of any of claims 1-5, wherein the HVAC branch loop includes an HVAC branch flow motivator (275) operationally coupled to the controller,
wherein the controller is configured to control the HVAC branch flow motivator, to draw the HVAC conditioning flow through the HVAC branch loop, and, while the HVAC branch flow motivator is operating, the controller is configured to control one or more of the temperature and flow rate through the through the HVAC branch loop, to thereby control a temperature of the ESS conditioning flow in the ESS conditioning loop,
optionally wherein the HVAC branch flow motivator is one or more of a compressor or an expansion valve.

7. The system of any of claims 1-6, wherein the HVAC system includes a heat pump (160) to heat the HVAC conditioning flow when the temperature of the battery pack approaches a lower limit of the target temperature range.

8. The system of any of claims 1-7, wherein the controller determines cooling or heating requirements of the battery pack based on an ambient temperature and/or based on a charge or discharge rate of the batteries.

9. A method of modulating an operating temperature of a battery pack (190), having batteries (200), of a battery energy storage system, ESS, (120) so that the operating temperature remains within a target temperature range, the method comprising:
directing, by a controller (280), a heating, ventilation and air conditioning, HVAC, conditioning flow (175) that flows in one direction or bidirectionally at a temperature and a flow rate to an HVAC branch loop (250) towards a heat exchanger (255) to modulate a temperature of an ESS conditioning flow (220) in an ESS conditioning loop (210) that is fluidly isolated from the HVAC branch loop, wherein the ESS conditioning loop is thermally coupled to the HVAC branch loop via the heat exchanger and thermally coupled to the battery pack; and
controlling, by the controller, one or more of the temperature and the flow rate of the HVAC conditioning flow, to thereby maintain the battery pack in a targeted temperature range.

10. The method of claim 9, wherein the target temperature range is between five and forty degrees Celsius.

11. The method of claims 9 or 10, wherein the battery pack includes lithium-ion batteries.

12. The method of any of claims 9-11, wherein the ESS conditioning loop is fluidly coupled to the battery pack so that the ESS conditioning flow is configured to flow through the battery pack and around each of the batteries.

13. The method of any of claims 9-12, wherein the HVAC conditioning flow is air, and the ESS conditioning flow is air or a dielectric.

14. The method of any of claims 9-13, wherein the HVAC branch loop includes an HVAC branch flow motivator (275) operationally coupled to the controller,
wherein the method includes controlling, by the controller, the HVAC branch flow motivator, to draw the HVAC conditioning flow through the HVAC branch loop, and while the HVAC branch flow motivator is operating, controlling one or more of the temperature and the flow rate of the HVAC conditioning flow, to thereby control the temperature of the ESS conditioning flow in the ESS conditioning loop;
optionally wherein the HVAC branch flow motivator is one or more of a compressor or an expansion valve.

15. The method of any of claims 9-14, wherein the HVAC system includes a heat pump, and the method includes: controlling, by the controller, the HVAC system to heat the HVAC conditioning flow when the operating temperature of the battery pack approaches a lower limit of the target temperature range, and/or determining, by the controller, cooling or heating requirements of the battery pack based on an ambient temperature and/or based on a charge or discharge rate of the batteries.
